# EUROPEAN PATENT SPECIFICATION

(11) **EP 4 194 981 B1**
(45) Date of publication and mention of the grant of the patent: **04.12.2024**
(21) Application number: 21853292.7
(22) Date of filing: 05.08.2021
(51) Int. Cl.: G05B 23/02, G05B 19/418

(54) **DISPLAY SYSTEM, DISPLAY METHOD, AND DISPLAY PROGRAM**
ANZEIGESYSTEM, ANZEIGEVERFAHREN UND ANZEIGEPROGRAMM
SYSTÈME D'AFFICHAGE, PROCÉDÉ D'AFFICHAGE ET PROGRAMME D'AFFICHAGE

(30) Priority: 06.08.2020 JP 2020133640
(43) Date of publication of application: 14.06.2023
(73) Proprietor: OMRON Corporation, Kyoto 600-8530 (JP)
(72) Inventor: SHIBAGAKI, Saeko, Kyoto-shi, Kyoto 600-8530 (JP); MINEMOTO, Toshifumi, Kyoto-shi, Kyoto 600-8530 (JP); HATTORI, Reiko, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2021/029041
(87) International publication number: WO 2022/030567

(56) References cited:
- WO-A1-2018/104985
- WO-A1-2020/009655
- JP-A- 2014 142 752
- JP-A- 2018 073 316
- JP-A- 2018 181 021
- JP-A- 2018 206 362
- JP-A- 2019 028 835
- US-A1- 2008 219 544

## Description

### TECHNICAL FIELD

The present invention relates to a display system, a display method, and a display program.

### RELATED ART

Patent Document 1 proposes a method for monitoring the state of a facility by dividing operating states into modes based on event signals, creating a normal model for each mode, and performing abnormality determination based on the created normal models. According to this method, the sufficiency of the learning data used to create the normal models is checked, and the thresholds to be used to determine abnormality are set based on the results of the check, so that incorrect notifications, in which a normal state is determined to be an abnormal state, can be prevented from being provided.

Patent Document 2 proposes a method for detecting the occurrence of an abnormality in products produced in a production facility. Specifically, Patent Document 2 proposes a method of classifying pieces of data collected from a production system into normal and abnormal cases of the products, identifying feature values that produce a significant difference between the normal case and the abnormal case, and diagnosing products regarding whether or not the products are normal, based on the identified feature values.

### RELATED ART DOCUMENTS

### PATENT DOCUMENTS

Patent Document 1: JP 2015-172945A
Patent Document 2: JP 2010-277199A
Patent document JP 2018 073316 discloses a further diagnostic system provided in production equipment.
Patent document US 2008/219544 A1 relates to another display system provided in production equipment.

### SUMMARY OF THE INVENTION

### PROBLEM TO BE SOLVED BY THE INVENTION

If an abnormality occurs in a production facility, such an abnormality must be immediately resolved. However, it is common that the user needs to investigate the cause of the abnormality with reference to a manual or the like before taking an action to resolve the abnormality. However, looking up the manual every time an abnormality occurs takes time and may delay the action. The present invention has been made to solve this problem, and aims to provide a display system, a display method, and a display program that make it possible to easily check components related to abnormalities that may occur in a production facility.

### MEANS FOR SOLVING THE PROBLEM

A display system according to the present invention is a display system to be provided in a production facility that produces products and includes, as components, at least one driving means for driving the production facility and at least one monitoring means for monitoring the production, the display system including: a control unit; a display unit; and a storage unit. The storage unit is configured to store a relationship between two or more components of the plurality of components as a causal relationship model regarding an abnormality that may occur in the production facility, and the control unit is configured to: display, on the display unit, a model diagram that has nodes corresponding to the components and one or more edges connecting the nodes to each other, based on the causal relationship model; and in response to a request from a user, display the model diagram in either a first mode in which all the nodes are displayed, or a second mode in which the nodes are divided into a predetermined number of groups based on a predetermined criterion and the groups are displayed as nodes.

With this configuration, when a causal relationship model is to be displayed, the user can select a mode in which all the nodes constituting the causal relationship model are displayed or a mode in which some nodes are divided into groups and the groups are displayed as nodes. Therefore, the causal relationship model can be displayed in a mode that suits the user's purpose. For example, when the user wishes to check the detailed causal relationship between the components, the nodes can be displayed in the first mode, and when the user wishes to check the overall picture of the causal relationship model, the nodes can be displayed in the second mode.

In the above-described display system, it is possible to employ a configuration in which the control unit in the second mode for the model diagram is configured to display the nodes in a plurality of tiers that have different display modes, by further dividing the plurality of groups into a predetermined number of groups stepwise from a lower tier to a higher tier, and display the groups.

In the above-described display system, the control unit may be configured to, when an abnormality occurs in the production facility: if the model diagram is in the first mode, change the display mode of the node corresponding to the component related to the abnormality; and if the model diagram is in the second mode, change the display mode of the group that includes the node corresponding to the component related to the abnormality.

As a result, it is easier for the user to visually check the component related to the abnormality. In particular, when the causal relationship model is displayed in the second mode, the user can swiftly visually check where the component of interest is located.

In the above-described display system, the control unit may be configured to, if the model diagram is in the second mode, when a group is selected from the groups, display the nodes included in the group.

With this configuration, it is possible to display the node corresponding to the detailed component only regarding the group to be checked. Therefore, it is possible to prevent the overall picture from being complex, which improves visibility.

A display method according to the present invention is a display method for displaying, on a display unit, a causal relationship between components of a production facility related to an abnormality that may occur in the production facility, the production facility producing products and including, as the components, at least one driving means for driving the production facility and at least one monitoring means for monitoring the production, the display method including: a step of storing a relationship between two or more components of the plurality of components as a causal relationship model regarding an abnormality that may occur in the production facility; and a step of displaying, on the display unit, a model diagram that has nodes corresponding to the components and one or more edges connecting the nodes to each other, based on the causal relationship model. In response to a request from a user, the model diagram is displayed in either a first mode in which all the nodes are displayed, or a second mode in which the nodes are divided into a predetermined number of groups based on a predetermined criterion and the groups are displayed.

A display program according to the present invention is a display program for displaying, on a display unit, a causal relationship between components of a production facility related to an abnormality that may occur in the production facility, the production facility producing products and including, as the components, at least one driving means for driving the production facility and at least one monitoring means for monitoring the production, the display program enabling a computer to carry out: a step of storing a relationship between two or more components of the plurality of components as a causal relationship model regarding an abnormality that may occur in the production facility; and a step of displaying, on the display unit, a model diagram that has nodes corresponding to the components and one or more edges connecting the nodes to each other, based on the causal relationship model. In response to a request from a user, the model diagram is displayed in either a first mode in which all the nodes are displayed, or a second mode in which the nodes are divided into a predetermined number of groups based on a predetermined criterion and the groups are displayed.

### EFFECTS OF THE INVENTION

According to the present invention, it is possible to easily check components related to abnormalities that may occur in a production facility.

### BRIEF DESCRIPTION OF THE DRAWINGS

FIG. 1 schematically illustrates an example of a scenario to which the present invention is applied.
FIG. 2 is a diagram showing an example of node grouping.
FIG. 3 is a block diagram showing a hardware configuration of an analysis device according to an embodiment of the present invention.
FIG. 4 is a schematic diagram showing a production facility according to an embodiment of the present invention.
FIG. 5 is a block diagram showing a functional configuration of the analysis device.
FIG. 6 is a flowchart showing an example of building a causal relationship model.
FIG. 7 is an example of a relationship between a control signal and a takt time.
FIG. 8A is an example of a causal relationship model.
FIG. 8B is an example of a causal relationship model.
FIG. 8C is an example of a causal relationship model.
FIG. 9 is a schematic diagram showing a packaging machine overlaid with nodes of a causal relationship model.
FIG. 10A is an example of a screen on a display device.
FIG. 10B is an example of a screen on the display device.
FIG. 10C is an example of a screen on the display device.
FIG. 11 is an example of a screen on which the nodes on the screen in FIG. 10A are grouped.
FIG. 12 is an example of a screen on the display device displayed when an abnormality has occurred.
FIG. 13 is an example of a screen on the display device.

### EMBODIMENTS OF THE INVENTION

Hereinafter, an embodiment according to one aspect of the present invention (hereinafter also referred to as the "present embodiment") will be described with reference to the drawings. However, the embodiment described below is merely an example of the present invention in all aspects. That is to say, when carrying out the present invention, specific configurations depending on the embodiment may be adopted as appropriate. The data that appears in the present embodiment is described using a natural language. However, more specifically, the data is specified using, for example, a computer-recognizable pseudo-language, commands, parameters, or a machine language.

### <1. Application Example>

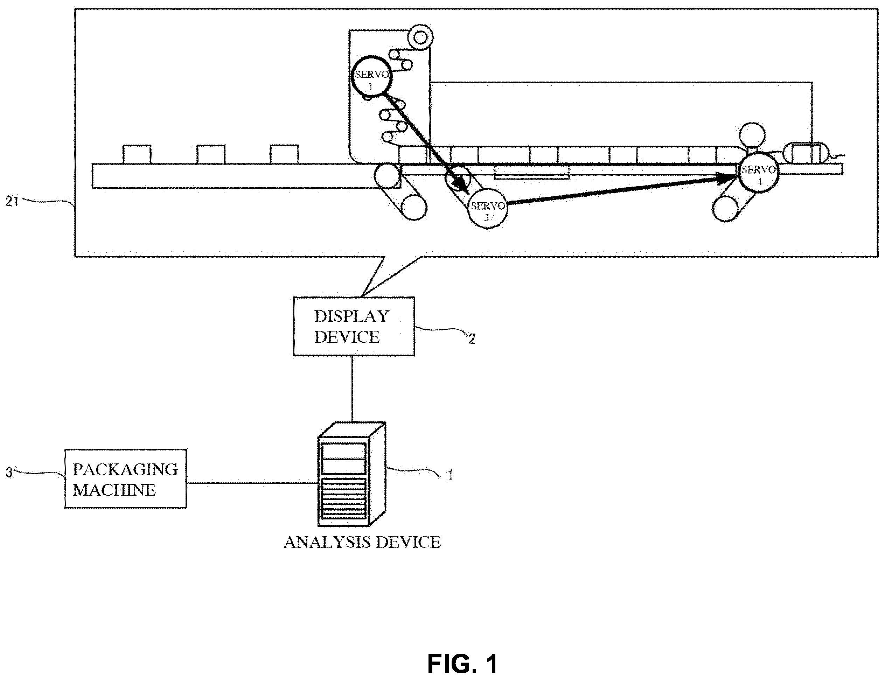

First, an example of a scenario to which the present invention is applied will be described with reference to FIG. 1. FIG. 1 schematically illustrates an example of a scenario to which a production system according to the present embodiment is applied. The production system according to the present embodiment includes a packaging machine 3, which is an example of a production facility, an analysis device 1, and a display device 2. The analysis device 1 is a computer configured to derive causal relationships between servomotors (driving means) and various sensors (monitoring means) provided in the packaging machine 3, and display the causal relationships. Hereinafter, the driving means such as the servomotors and the monitoring means such as the various sensors are referred to as components.

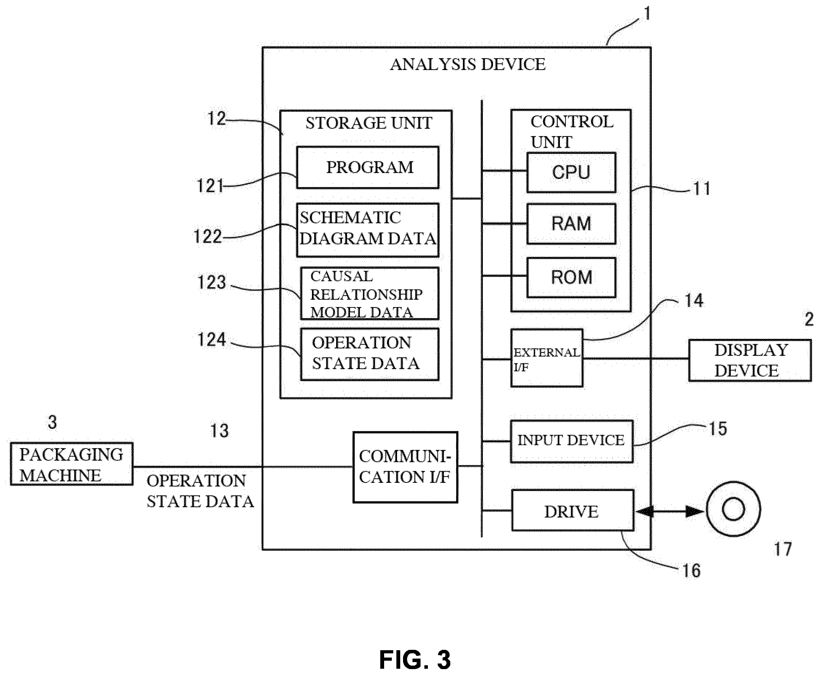

The analysis device 1 generates a causal relationship model representing relationships between components regarding an abnormality that may occur in the packaging machine 3, and displays the causal relationship model on a screen 21 of the display device 2. The example in FIG. 1 shows a causal relationship model for the case in which wear of a leather brake belt for a film roll 30 described below (see FIG. 3) occurs as an abnormality. That is to say, servos 1, 3, and 4 of the plurality of servomotors provided in the packaging machine 3 are displayed as nodes, and are connected to each other by edges. The direction of each edge indicates a causal relationship. That is to say, the edges show that, when the leather belt wears, the servo 1 affects the servo 3, and the servo 3 affects the servo 4, resulting in the wear of the leather belt. Therefore, the operator of the packaging machine 3 should check the cause of the abnormality in the order of the servos 4, 3, and 1. However, as described in detail below, each servomotor has a plurality of controllable feature values such as torque and position, and any of the respective feature values of each servomotor constitutes the above causal relationship.

The example in FIG. 1 shows all the components of a causal relationship model in which leather belt wear is an abnormal event. However, when there are many components, it may be difficult to understand the causal relationship between the components. Therefore, in the present embodiment, the analysis device 1 is configured to employ either a mode (a first mode) in which all the components of the causal relationship model are displayed, or a mode (a second mode) in which a plurality of groups are generated by grouping some components and the groups are displayed as a causal relationship model.

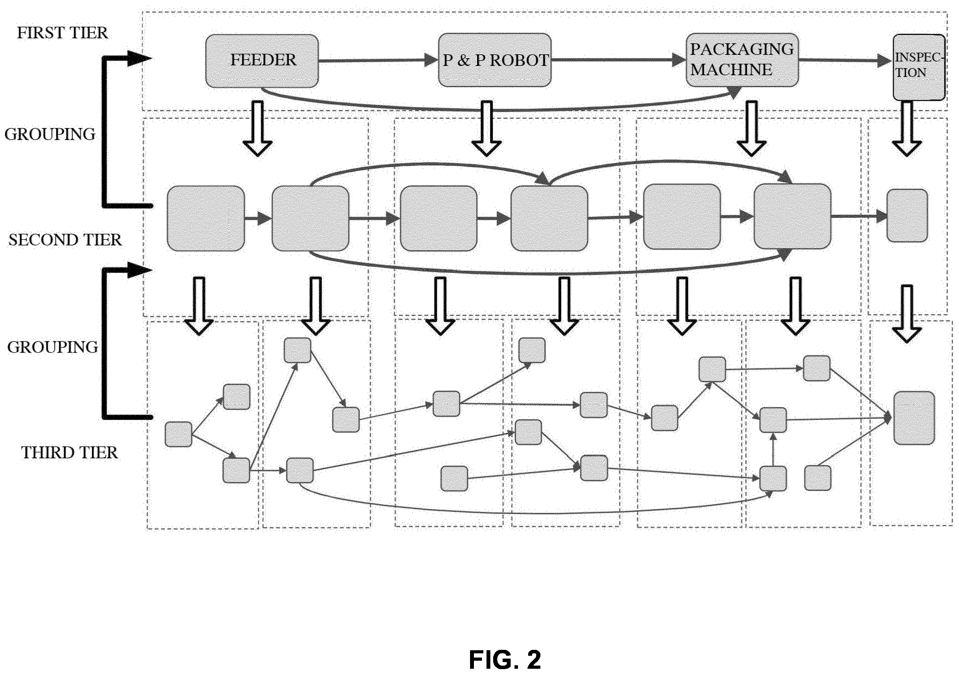

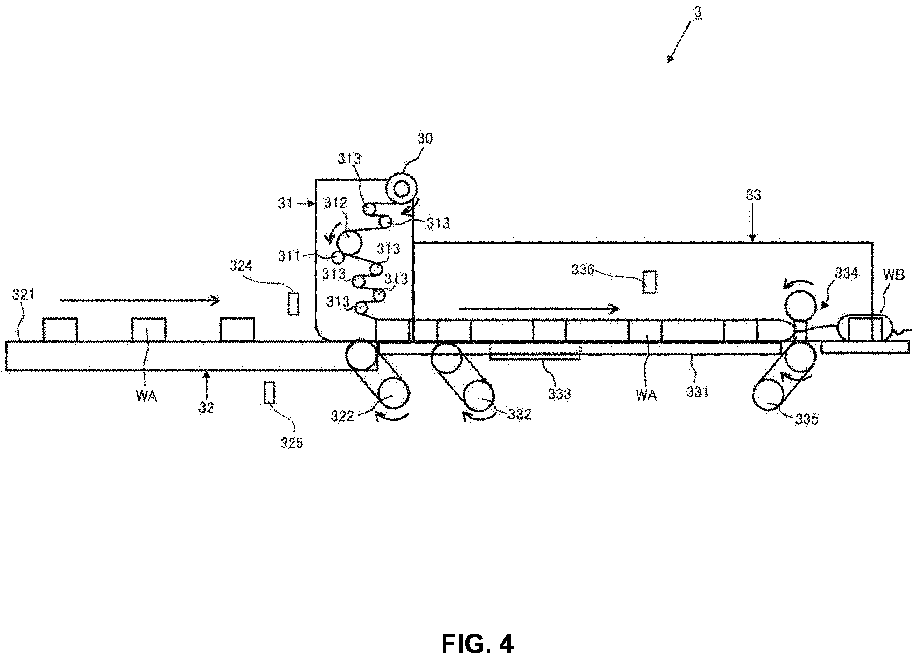

For example, the example in FIG. 2 shows the components of a production system that additionally includes two facilities (a feeder and a pick and place robot (a P & P Robot)) located upstream of the above-described packaging machine 3 and an inspection facility located downstream of the packaging machine. The feeder is a device for feeding items such as food and stationery to a conveyor. The P & P robot is a well-known robot for sucking the items on the conveyor and transferring them to an upstream conveyor (the item transport unit 32 in FIG. 4, which will be described later) of the packaging machine. The inspection facility is a well-known device for inspecting the external appearance of the packaged items. A causal relationship model that has these four facilities as nodes is displayed in the first tier. In addition, a causal relationship model that has a plurality of devices included in each of the facilities in the first tier as nodes is displayed in the second tier. Furthermore, a causal relationship model that has the plurality of components included in the devices in the second tier (the above-described servomotors and various sensors) as nodes is displayed in the third tier. In other words, the components in the third tier are divided into a plurality of groups, a model that has these groups as nodes is displayed in the second tier, the devices in the second tier are divided into a plurality of groups, and a mode that has these groups as nodes is displayed in the first tier.

In one example in the present embodiment, the causal relationship model can be displayed in any of the modes shown in the first to third tiers. As a result, when the detailed causal relationship model regarding the relationship between the components is to be checked, the third tier can be displayed, and when the causal relationship model regarding the relationship between the devices or the facilities, the first or second tier can be displayed.

In the above description, the packaging machine 3, the feeder, the P & P robot, and the inspection facility are shown as examples of production facilities, but any production facility may be employed as long as some kind of product can be produced, and the type thereof need not be particularly limited. The type of its components need not be particularly limited and may be selected as appropriate depending on the embodiment. Examples of the components include a conveyor, a robot arm, a servomotor, a cylinder (such as a molding machine), a suction pad, a cutter device, and a sealing device. Instead of the above-described packaging machine 3, the production facility may be, for example, a multifunction apparatus including a printer, a mounting machine, a reflow oven, a board inspection device, and so on. Furthermore, instead of a device that involves some physical actions as described above, the production facility may include, for example, a device that performs internal processing such as a device that detects some information with various sensors, a device that acquires data from various sensors, a device that detects some information from the acquired data, a device that performs information processing on the acquired data, and so on. One production facility may be constituted by one or more devices, or constituted by a portion of a device. When the same device performs a plurality of kinds of processes, the device may be regarded as a different component for each kind of process. For example, if the same device performs a first process and a second process, the device may be regarded as a first component when performing the first process, and may be regarded as a second component when performing the second process.

### <2. Configuration Examples>

### <2-1. Hardware Configuration>

Next, an example of a hardware configuration of the production system according to the present embodiment will be described. FIG. 3 is a block diagram showing an example of a hardware configuration of the analysis device 1 according to the present embodiment, and FIG. 4 is a diagram showing a schematic configuration of the packaging machine.

### <2-1-1. Analysis Device>

First, an example of a hardware configuration of the analysis device 1 according to the present embodiment will be described with reference to FIG. 3. As shown in FIG. 3, the analysis device 1 is a computer in which a control unit 11, a storage unit 12, a communication interface 13, an external interface 14, an input device 15, and a drive 16 are electrically connected to each other.

The control unit 11 includes a CPU (Central Processing Unit), a RAM (Random Access Memory), a ROM (Read Only Memory), and so on, and controls each component to perform information processing. The storage unit 12 is, for example, an auxiliary storage device such as a hard disk drive or a solid state drive, and stores a program 121 that is to be executed by the control unit 11, schematic diagram data 122, causal relationship model data 123, operation state data 124, and so on.

The program 121 is a program for generating a causal relationship model representing a relationship between an abnormality occurring in the packaging machine 3 and a component, displaying the model on the display device 2, and so on. The schematic diagram data 122 is data that represents a schematic diagram showing the target production facility, and is data that represents a schematic diagram showing the packaging machine 3 in the present embodiment. The schematic diagram need only be a schematic diagram of the entire packaging machine, showing at least the locations of the components indicated by the causal model, and does not necessarily have to be a detailed diagram. Alternatively, the diagram may be an enlarged diagram showing only a portion of the packaging machine 3.

The causal relationship model data 123 is data that represents a causal relationship model regarding the occurrence of an abnormality built using the feature values of the components extracted from the packaging machine 3. That is to say, the causal relationship model data 123 is data that represents the causal relationship between the components when an abnormality occurs. In this analysis device 1, as will be described later, causal relationship model data is generated from the feature values or the like extracted from the packaging machine 3. However, the analysis device 1 may also store causal relationship model that has been generated in advance in an external device.

The operation state data 124 is data indicating the operation state of the packaging machine 3. Although details will be described later, for example, the operation state data 124 may be data that can be generated through the driving of the components described above, such as measurement data regarding torque, speed, acceleration, temperature, and pressure, for example. When the component is a sensor, the operation state data 124 may be the result of detection, for example, detection data indicating "on" or "off", which represents whether or not an item WA is present.

The communication interface 13 is, for example, a wired LAN (Local Area Network) module, a wireless LAN module, or the like, and is an interface for performing wired or wireless communication. That is to say, the communication interface 13 is an example of a communication unit configured to perform communication with another device. The analysis device 1 according to the present embodiment is connected to the packaging machine 3 via the communication interface 13.

The external interface 14 is an interface for connecting to an external device, and is configured as appropriate for the external device to be connected. In the present embodiment, the external interface 14 is connected to the display device 2. Note that the display device 2 may be a well-known liquid crystal display, touch panel display, or the like.

The input device 15 is a device for inputting, such as a mouse or a keyboard.

The drive 16 is, for example, a CD (Compact Disk) drive, a DVD (Digital Versatile Disk) drive, or the like, and is a device for reading a program stored on a storage medium 17. The type of the drive 16 may be appropriately selected according to the type of the storage medium 17. Note that at least some of the various kinds of data 122 to 124 including the programs 121 stored in the storage unit may be stored on this storage medium 17.

The storage medium 17 is a medium that stores information such as programs through electrical, magnetic, optical, mechanical, or chemical actions so that a computer, another device, a machine, and so on can read the information such as the programs. FIG. 3 illustrates a disk-type storage medium such as a CD or DVD as an example of the storage medium 17. However, the type of the storage medium 17 is not limited to the disk type, and may also be a type other than the disk type. An example of a storage medium of a type other than the disk type is a semiconductor memory such as a flash memory.

Regarding the specific hardware configuration of the analysis device 1, it is possible to omit, replace, or add components as appropriate depending on the embodiment. For example, the control unit 11 may also include a plurality of processors. The analysis device 1 may also be constituted by a plurality of information processing device. An information processing device designed exclusively for the service to be provided may also be used as the analysis device 1, or a general-purpose server device or the like may be used instead.

### <2-1-2. Packaging Device>

Next, an example of a hardware configuration of the packaging machine 3 according to the present embodiment will be described with reference to FIG. 4. FIG. 4 schematically illustrates an example of a hardware configuration of the packaging machine 3 according to the present embodiment. The packaging machine 3 is a so-called horizontal pillow packaging machine, and is a device for packaging items WA such as food (for example, dried noodles) or stationery (for example, an eraser). However, the type of the items WA may be selected depending on the embodiment as appropriate, and is not particularly limited. The packaging machine 3 mainly includes three devices, i.e., a film transport unit 31 that includes a film roll 30 formed by winding a packaging film, and transports the packaging film, an item transport unit 32 that transports the items WA, and a bag-making unit 33 that packages the items with the packaging film.

The packaging film can be, for example, a resin film such as a polyethylene film. The film roll 30 is provided with a winding core, and the packaging film is wound around the winding core. The winding core is supported so as to be rotatable about an axis, which enables the film roll 30 to feed out the packaging film while rotating.

The film transport unit 31 includes a drive roller that is driven by a servomotor 311 (the servo 1), a passive roller 312 to which a rotational force is applied from the drive roller, and a plurality of pulleys 313 that guide the packaging film while applying a tension thereto. Thus, the film transport unit 31 is configured to feed out the packaging film from the film roll 30 and transport the fed-out packaging film to the bag-making unit 33 without relaxing it.

The item transport unit 32 includes a conveyor 321 that conveys the item WA to be packaged, and a servo motor 322 (the servo 2) that drives the conveyor 321. As illustrated in FIG. 4, the item transport unit 32 passes below the film transport unit 31 and is connected to the bag-making unit 33. As a result, the item WA transported by the item transport unit 32 is supplied to the bag-making unit 33, and is packaged with the packaging film supplied from the film transport unit 31. A fiber sensor 324 (a sensor 1) for detecting the position of the item WA is provided above a downstream section of the conveyor 321. Furthermore, a fiber sensor 325 (a sensor 2) for detecting stranding of the item WA is provided below the conveyor 321. These sensors 1 and 2 detect whether or not the item WA is transported to the correct position in order to be properly packaged.

The bag-making unit 33 includes a conveyor 331, a servo motor 332 (a servo 3) that drives the conveyor 331, a center sealing unit 333 that seals the packaging film in the transport direction, and an end sealing unit 334 that cuts the packaging film at both ends in the transport direction and seals the packaging film at each end.

The conveyor 331 transports the item WA transported from the item transport unit 32 and the packaging film supplied from the film transport unit 31. The packaging film supplied from the film transport unit 31 is supplied to the center sealing unit 333 while being appropriately folded so that both side edge portions in the width direction thereof overlap each other. The center sealing unit 333 is constituted by, for example, a pair of left and right heating rollers (heaters 1 and 2), and heats and seals both side edge portions of the folded packaging film in the transport direction. As a result, the packaging film is formed into a tubular shape. The item WA is put into this tubular packaging film. A fiber sensor 336 (a sensor 3) for detecting the position of the item WA is provided upstream of the end sealing unit 334, above the conveyor 331.

On the other hand, the end sealing unit 334 includes, for example, a roller that is driven by a servomotor 335, a pair of cutters that are opened and closed by the rotation of the roller, and heaters (heaters 3) that are provided on both sides of each cutter. With these components, the end sealing unit 334 is configured to cut the tubular packaging film in the direction orthogonal to the transport direction and to heat and seal the cut portion. After passing through the end sealing unit 334, the leading end of the tubular packaging film is sealed on both sides in the transport direction and is separated from the following portion to form a package WB that encloses the item WA.

### <2-1-3. Packaging Process>

The packaging machine 3 described above can package the item WA through the following process. That is to say, the film transport unit 31 feeds out the packaging film from the film roll 30. Also, the item transport unit 32 transports the item WA to be packaged. Next, the center sealing unit 333 of the bag-making unit 33 forms the fed-out packaging film into a tubular shape. After the item WA is put into the formed tubular packaging film, the tubular packaging film is cut in the direction orthogonal to the transport direction by the end sealing unit 334, and both sides of the cut portion in the transport direction are heated and sealed. Thus, a horizontal pillow type package WB that encloses the item WA is formed. That is to say, packaging of the item WA is complete.

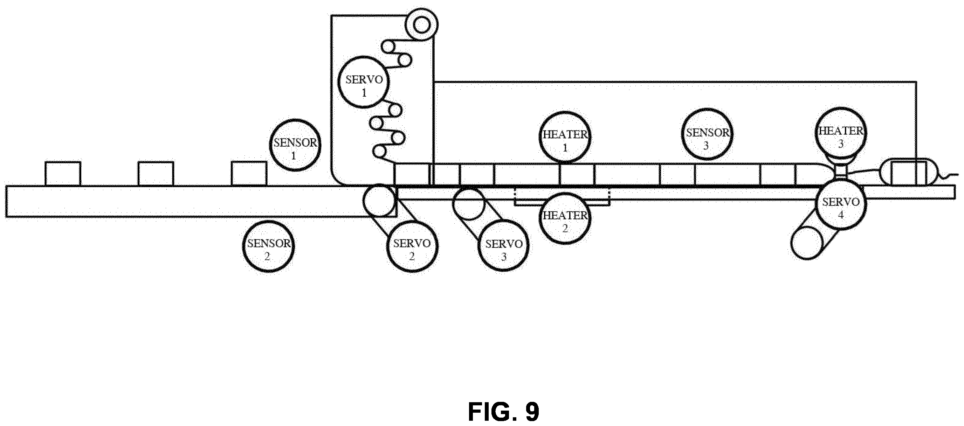

Note that the drive control of the packaging machine 3 can also be performed using a PLC or the like provided separately from the packaging machine 3. If this is the case, the operation state data 124 described above can be acquired from the PLC. In addition, for example, ten components are set in the packaging machine 3 with the above-described configuration, in order to construct causal relationships regarding an abnormality (see FIG. 9, for example). That is to say, the above-described servos 1 to 4, heaters 1 to 3, and sensors 1 to 3 are set as components, and a causal relationship model is built regarding the causal relationships between these components when an abnormality occurs. Details will be described later.

### <2-2. Functional Configuration>

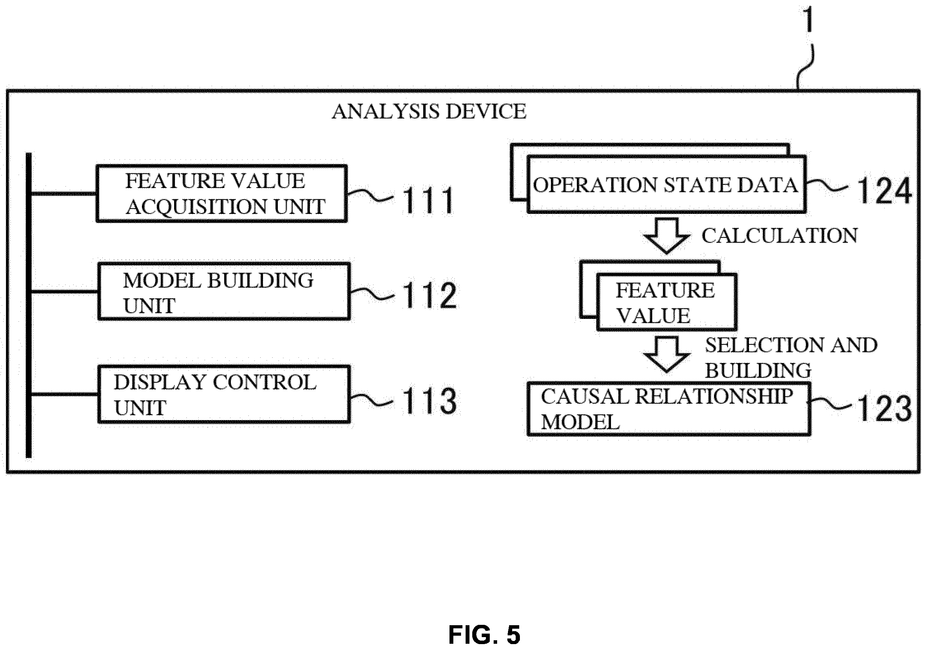

Next, the functional configuration (software configuration) of the analysis device 1 will be described. FIG. 5 shows an example of a functional configuration of the analysis device 1 according to the present embodiment. The control unit 11 of the analysis device 1 loads the program 121 stored in the storage unit 12 to the RAM. Thereafter, the control unit 11 causes the CPU to interpret and execute the program 121 loaded to the RAM, to control each component. As a result, as shown in FIG. 5, the analysis device 1 according to the present embodiment functions as a computer that includes a feature value acquisition unit 111, a model building unit 112, and a display control unit 113.

The feature value acquisition unit 111 acquires a plurality of types of feature values calculated from operation state data 124 that indicates the operation states of the packaging machine 3, for both the normal case in which the packaging machine 3 has normally formed the package WB and the abnormal case in which an abnormality has occurred in the formed package WB. Using the plurality of types of feature values acquired for the normal case and the abnormal case, the model building unit 112 selects feature values that are useful for prediction of an abnormality from the plurality of types of feature values acquired, based on a predetermined algorithm for deriving the degree of association between an abnormality occurring in the formed package WB and each type of feature value. Thereafter, using the selected feature values, the model building unit 112 builds a causal relationship model 123 indicating a causal relationship between the components when an abnormality occurs.

The display control unit 113 has the function of displaying a schematic diagram of the above-described packaging machine 3, a causal relationship model (which may be the above-described grouping display), various types of feature values, and so on, on the screen 21 of the display device 2. In addition, the display control unit 113 performs control to display various kinds of information on the screen 21 of the display device 2.

Each function of the analyzer 1 will be described in detail in the operation example below. Note that the present embodiment describes an example in which all the above functions are realized using a general-purpose CPU. However, some or all of the above functions may be realized using one or more dedicated processors. In addition, regarding the functional configuration of the analysis device 1, the functions may be omitted, replaced, or added as appropriate depending on the embodiment.

### <3. Operation Example>

Next, an operation example of the production system with the above-described configuration will be described.

### <3-1. Creation of Causal Relationship Model>

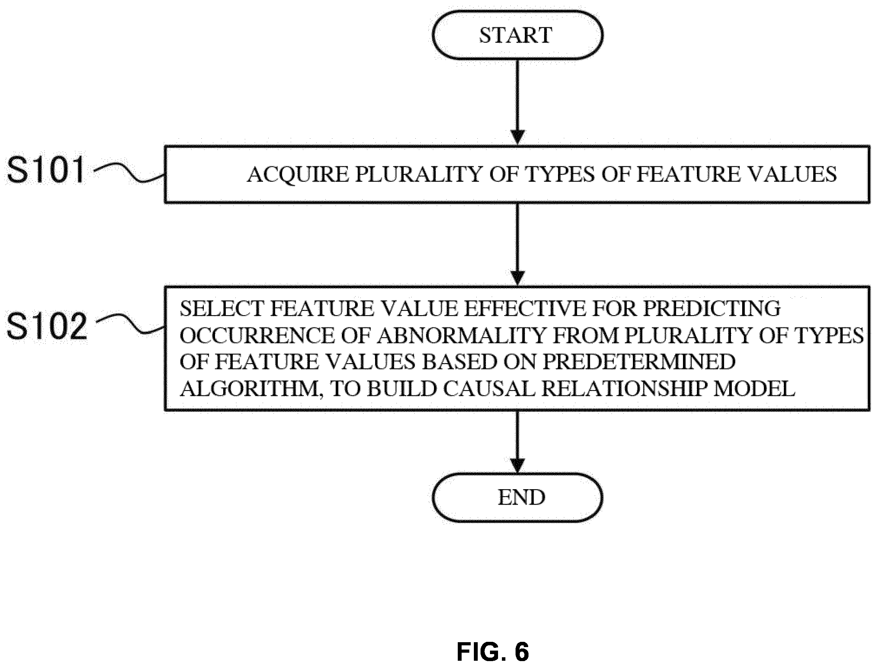

First, with reference to FIG. 6, a processing procedure through which the analysis device creates a causal relationship model will be described. FIG. 6 illustrates an example of a processing procedure for the analysis device when creating a causal relationship model.

### (Step S101)

In the first step S101, the control unit 11 of the analysis device 1 functions as the feature value acquisition unit 111, and acquires a plurality of types of feature values calculated from operation state data 124 that indicates the operation states of the packaging machine 3, for both the normal case in which the packaging machine 3 has normally formed the package WB and the abnormal case in which an abnormality has occurred in the formed package WB.

Specifically, first, the control unit 11 collects operation state data 124 classified into data for the normal case and data for the abnormal case. The type of operating state data 124 to be collected is not particularly limited as long as it indicates the state of the packaging machine 3. In the present embodiment, the operating state data 124 may be data that can be generated through the driving of the components described above, and examples of which include measured data such as torque, speed, acceleration, temperature, and pressure.

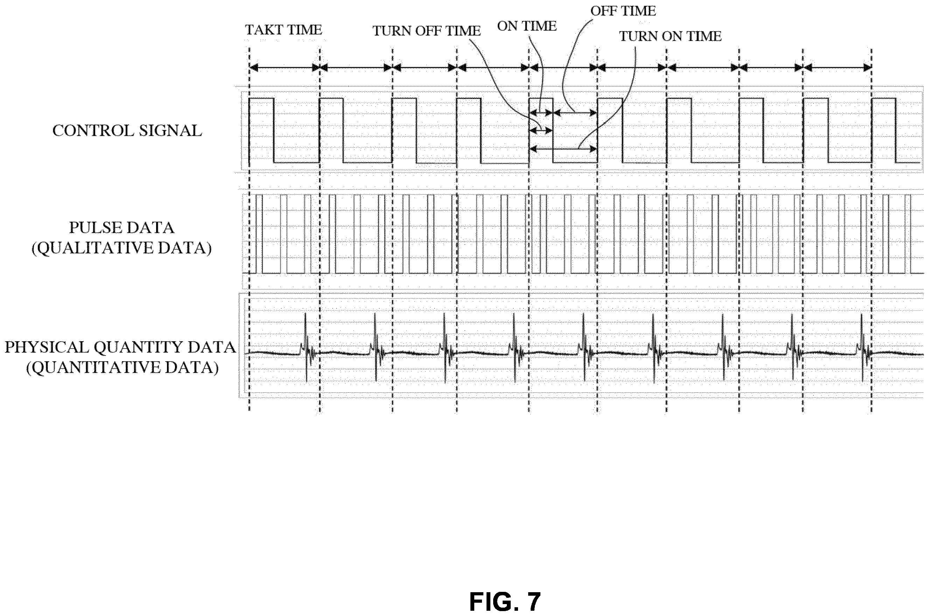

When the component is a sensor, the operating state data 124 can be measured data such as an ON time, an OFF time, a turn ON time, and a turn OFF time. The ON time and the OFF time are respectively the total time during which the control signal is ON and the total time during which the control signal is OFF within the target frame, as shown in FIG. 7, which will be described later. The turn ON time and the turn OFF time are respectively the time until the control signal turns ON and the time until the control signal turns OFF for the first time within the target frame. In addition, the control unit 11 can acquire, as the operation state data 124, the detection results of the sensors, for example, detection data indicating whether or not an item WA is present, by "on" or "off". Note that the collected operation state data 124 may be stored in the storage unit 12 or stored in an external storage device.

Next, the control unit 11 divides the collected operation state data 124 into frames to define a processing range for calculating features values. For example, the control unit 11 may divide the operation state data 124 into frames of a fixed time length. However, the packaging machine 3 does not necessarily operate at regular time intervals. Therefore, if the operation state data 124 is divided into frames of a fixed time length, the operations of the packaging machine 3 reflected in the frames may be shifted with respect to each other.

Therefore, in the present embodiment, the control unit 11 divides the operation state data 124 into frames of a takt time. The takt time is the time required to produce a predetermined number of products, i.e., the time required to form a predetermined number of packages WB. This takt time can be specified based on a signal that controls the packaging machine 3, which is, for example, a control signal that controls the operation of each servomotor or the like of the packaging machine 3.

The relationship between the control signal and the takt time will be described with reference to FIG. 7. FIG. 7 schematically illustrates the relationship between the control signal and the takt time. As shown in FIG. 7, a control signal for a production facility that repeatedly produces products, such as the packaging machine 3, is a pulse signal that periodically alternates between "on" and "off' in response to the production of a predetermined number of products.

For example, in the control signal shown in FIG. 7, "on" and "off" each appear once during the formation of one package WB. Therefore, the control unit 11 can acquire this control signal from the packaging machine 3 and determine the time from a rise ("on") to the next rise ("on") of the acquired control signal as the takt time. Thereafter, as shown in FIG. 7, the control unit 11 can divide the operation state data 124 into frames each corresponding to the takt time.

Note that the type of the control signal is not particularly limited as long as the signal can be used to control the packaging machine 3. For example, if the packaging machine 3 includes a sensor for detecting a mark provided on a packaging film, and a signal output from this sensor is used to adjust the feeding amount of the packaging film, this output signal from the sensor may be used as a control signal.

Next, the control unit 11 calculates feature values from each frame of the operation state data 124. The type of feature values is not particularly limited as long as each feature value indicates a feature of the production facility.

For example, if the operation state data 124 is quantitative data such as the above measured data (the physical quantity data in FIG. 7), the control unit 11 may calculate the amplitude, the maximum value, the minimum value, the average value, the variance value, the standard deviation, the autocorrelation coefficient, the maximum value of a power spectrum obtained through a Fourier transform, the skewness, the pointedness, and so on as feature values.

Alternatively, for example, if the operation state data 124 is qualitative data such as the above detection data (the pulse data in FIG. 7), the control unit 11 may calculate the "on" time, the "off" time, the duty ratio, the number of "on" times, the number of "off" times, and so on as feature values.

Furthermore, the feature value may be derived not only from a single type of operation state data 124, but from a plurality of types of operation state data 124. For example, the control unit 11 may calculate a cross-correlation coefficient, a ratio, a difference, a synchronization deviation amount, a distance, and so on between frames corresponding to two types of operation state data 124 as feature values.

The control unit 11 calculates a plurality of types of feature values as described above, from the operation state data 124. As a result, the control unit 11 can acquire a plurality of types of feature values calculated from the operation state data 124 for both the normal case and the abnormal case. Note that the processing from the collection of the operating state data 124 to the calculation of feature values may be performed by the analysis device 1 or various devices that control the packaging machine 3, instead of the analysis device 1. In addition, the control unit 11 may discretize the various types of feature values. For example, values higher than a threshold may be regarded as "1" or "high", and values lower than the threshold may be regarded as "0" or "low".

### (Step S102)

In the next step S102, the control unit 11 functions as the model building unit 112 to select a feature value that is effective for predicting an abnormality, from the plurality of types of feature values in the normal case and the abnormal case acquired in step S101, based on a predetermined algorithm that identifies the degree of association between the abnormalities that may occur in the formed package WB and the plurality of types of feature values.

The predetermined algorithm may be formed using, for example, a Bayesian network. A Bayesian network is one of graphical modeling methods for expressing the causal relationship between a plurality of random variables in the form of a directed acyclic graph structure, and expresses the causal relationship between random variables using a conditional probability.

The control unit 11 uses the acquired feature values and the state of the package WB as random variables, i.e., sets the acquired feature values and the state of the package WB to the nodes, to build a Bayesian network, thereby being able to derive the causal relationship between the acquired feature values and the state of the package WB. A known method may be used to build the Bayesian network. For example, the Greedy Search algorithm, the Stingy Search algorithm, or a structure learning algorithm such as the exhaustive search method may be used to build the Bayesian network. The AIC (Akaike's Information Criterion), C4.5, the CHM (Cooper Herskovits Measure), the MDL (Minimum Description Length), the ML (Maximum Likelihood), or the like may be used as an evaluation criterion for the built Bayesian network. Also, a pairwise method, a listwise method, or the like may be used as a processing method for the case in which missing values are included in the learning data (operation state data 124) used to build the Bayesian network.

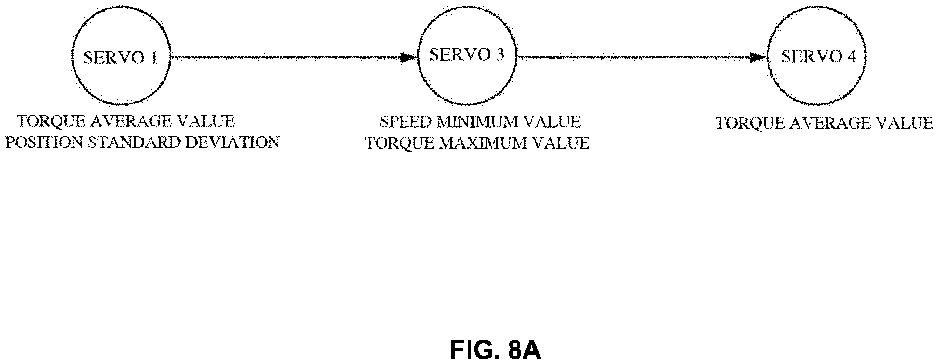

For example, FIG. 8A shows a causal model when the abnormal event is leather belt wear. That is to say, a causal relationship model indicating the following relationship is built: the model indicating that the average torque value and the standard deviation of the position, which are the feature values of the servo 1, affect the minimum speed value and the maximum torque value, which are the feature values of the servo 3, and these values in turn affect the average torque value of the servo 4.

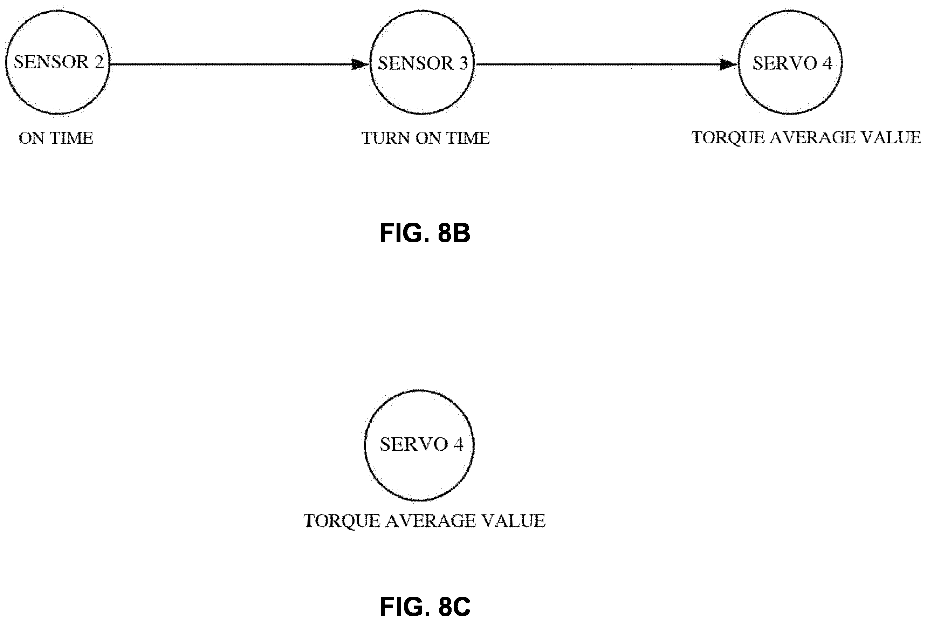

FIG. 8B shows a causal relationship model when the abnormal event is the looseness of the chain of the conveyor 321 of the item transport unit 32. That is to say, a causal relationship model indicating the following relationship is built: the ON time, which is the feature value of the sensor 2, affects the turn ON time, which is the feature value of the sensor 3, and this value in turn affects the torque average value of the servo 4.

FIG. 8C shows a causal relationship model when the abnormal event is a packaging film sealing failure. For this abnormal event, a causal relationship indicating that the only cause is the torque average value of the server 4 is built. The causal models built in this manner are stored in the storage unit 12 as pieces of causal relationship model data 123.

Note that the method of using the acquired feature values and the state of the packaged WB as random variables can be set as appropriate depending on the embodiment. For example, the state of the packaged WB can be regarded as a random variable by defining the event that the packaged WB is normal as "0" and defining the event that an abnormality occurs in the packaged WB as "1", and associating each event with a probability. Alternatively, for example, the states of each feature value can be regarded as a random variable by defining the event in which the feature value is no greater than a threshold value as "0" and defining the event in which the feature value is greater than the threshold value as "1", and associating each event with a probability. Note that the number of states to be set for each feature value is not limited to two and may also be three or more.

### <3-2. Display of Causal Relationship Model>

Next, the display of the causal relationship model built as described above will be described. In this case, the control unit 11 of the analysis device 1 functions as a display control unit 113. The display control unit 113 controls the display of the screen 21 described below. First, the display control unit 113 overlays a schematic diagram 122 read out from the storage unit 12 and the above-described causal relationship model 123 on the screen 21 of the display device 2. FIG. 9 shows a diagram in which components that may cause an abnormal event in the present embodiment are overlaid on the schematic diagram. Here, as described above, the servos 1 to 4, the heaters 1 to 3, and the sensors 1 to 3, which are nodes of the causal relationship model, are arranged at the installation positions thereof in the schematic diagram. Thereafter, on the screen 21 of the display device 2, which will be described below, the components to be used to build a causal relationship model are selected as nodes from the above components according to the abnormal event selected by the user, and edges with arrows indicating causal relationships are displayed together with the nodes.

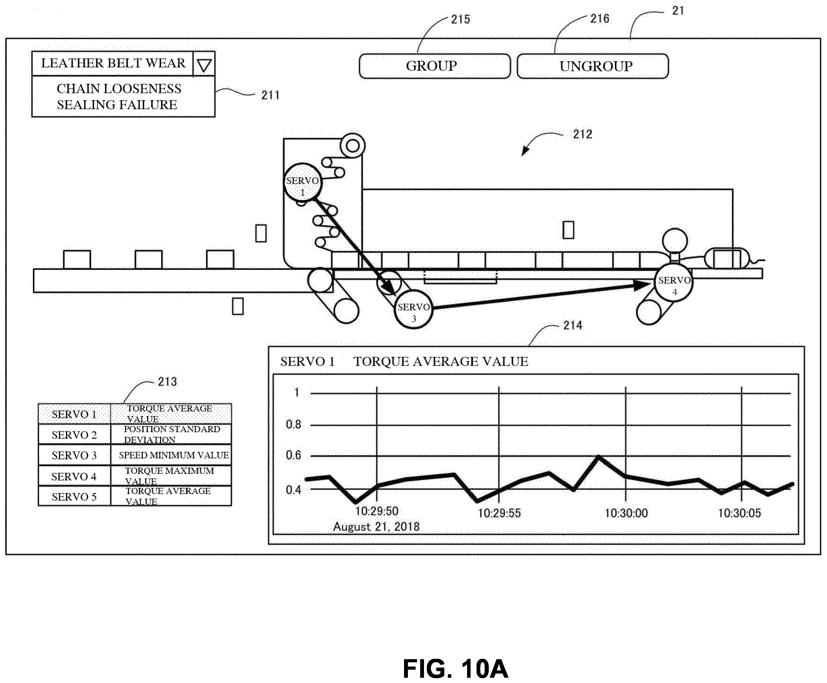

FIG. 10A is an example of the screen 21 of the display device 2 displaying a causal relationship model. The user can operate this screen 21, using the above-described input device 15. In this screen 21, a selection box 211 that is used to select an abnormal event is displayed on the upper left, which allows the user to select an abnormal event, using a pull-down menu. In this example, leather belt wear, chain looseness, and sealing failure are indicated as abnormal events, and leather belt wear is selected from these events.

A model diagram 212 in which a schematic diagram showing the packaging machine and a causal relationship model are overlaid with each other is displayed below the selection box 211. In the example in FIG. 10A, a model diagram for the case in which leather belt wear is the abnormal event is displayed. Also, a list 213 is displayed at the lower left of this model diagram 212, in which components and the feature values thereof corresponding to the selected abnormal event are shown. The user can select one of the components and the feature value thereof from the list 213. When the use selects one component, the component corresponding thereto in the model diagram 212 is highlighted. In this example, "SERVO 1 - TORQUE AVERAGE VALUE" is selected from the list 213, and accordingly the servo 1 in the model diagram 212 is highlighted. Various methods of highlighting can be used, such as coloring and blinking, as long as the node can be distinguished from other nodes.

Furthermore, a graph 214 is displayed on the right side of the list 213, indicating changes over time in the selected feature. In this example, "SERVO 1 - TORQUE AVERAGE VALUE" is selected, and accordingly a line graph 214 indicating changes over time in the value is displayed.

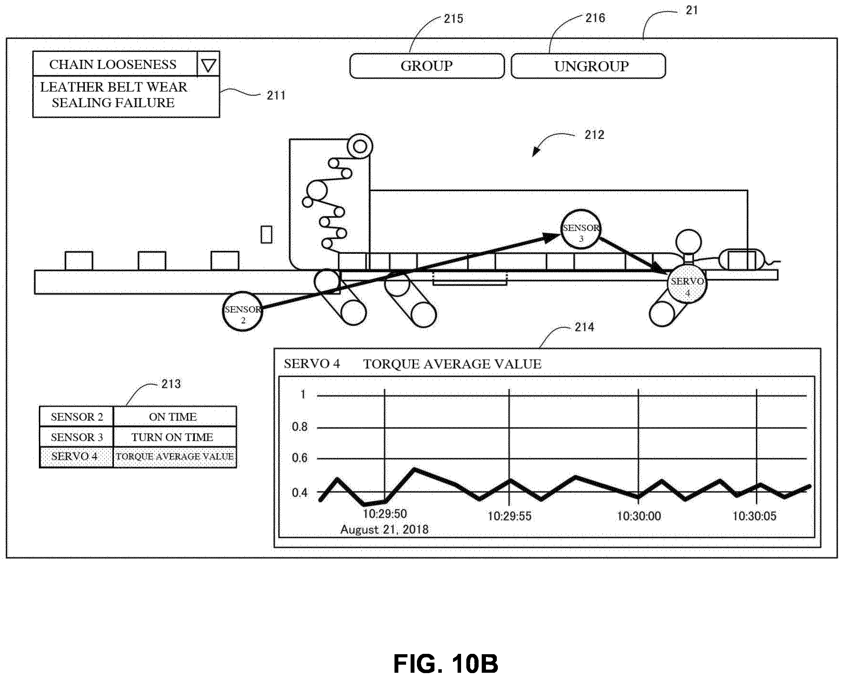

FIG. 10B shows an example in which chain looseness is displayed as an abnormal event in the box 211. As a result, components that may cause chain looseness and feature values thereof are displayed in the list 213. In this example, "SERVO 4 - TORQUE AVERAGE VALUE" is selected, and accordingly the servo 4 in the model diagram 212 is highlighted and a line graph 214 indicating changes over time in "SERVO 4 - TORQUE AVERAGE VALUE" is displayed.

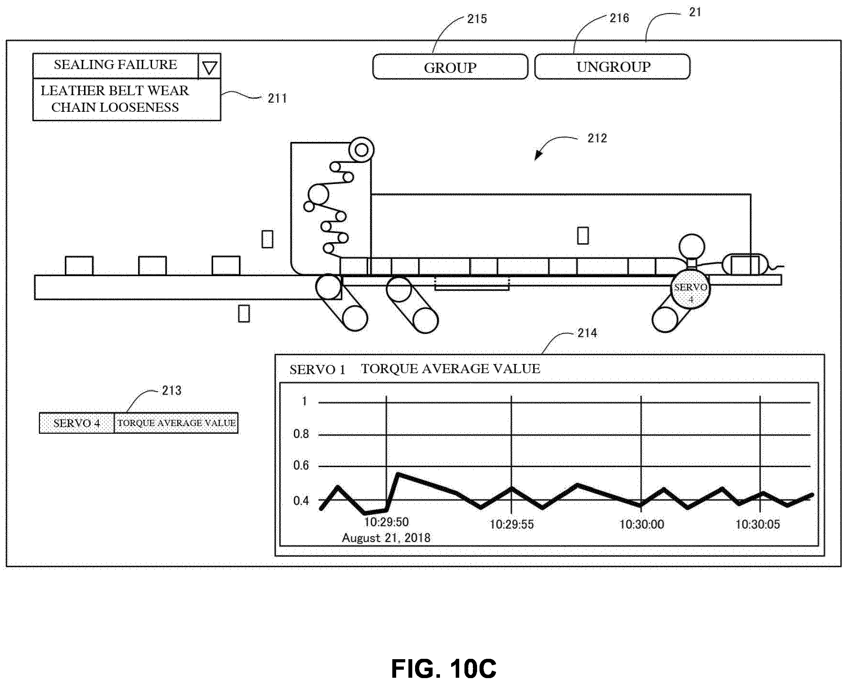

FIG. 10C shows an example in which sealing failure is displayed as an abnormal event in the box 211. As a result, components that may cause sealing failure and feature values thereof are displayed in the list 213. In this example, "SERVO 4 - TORQUE AVERAGE VALUE" is selected, and accordingly the servo 4 in the model diagram 212 is highlighted and a line graph 214 indicating changes over time in "SERVO 4 - TORQUE AVERAGE VALUE" is displayed.

The above-described operations of the screen 21 can be summarized as follows. First, the user selects an anormal event that is to be checked from the selection box 211, using the input device 15. As a result, the display control unit 113 displays the model diagram 212 and the list 213 corresponding to the selected abnormal event, on the screen. Thereafter, when one of the features values is selected from the list 213, the node corresponding thereto is highlighted in the model diagram 212, and the graph 214 indicating changes over time in the selected feature value is displayed. Therefore, the user can visually check the causal relationship regarding the abnormal event while viewing this screen 21. Note that the period corresponding to the changes over time in the feature value to be displayed in the graph 214 can be set by the user as desired.

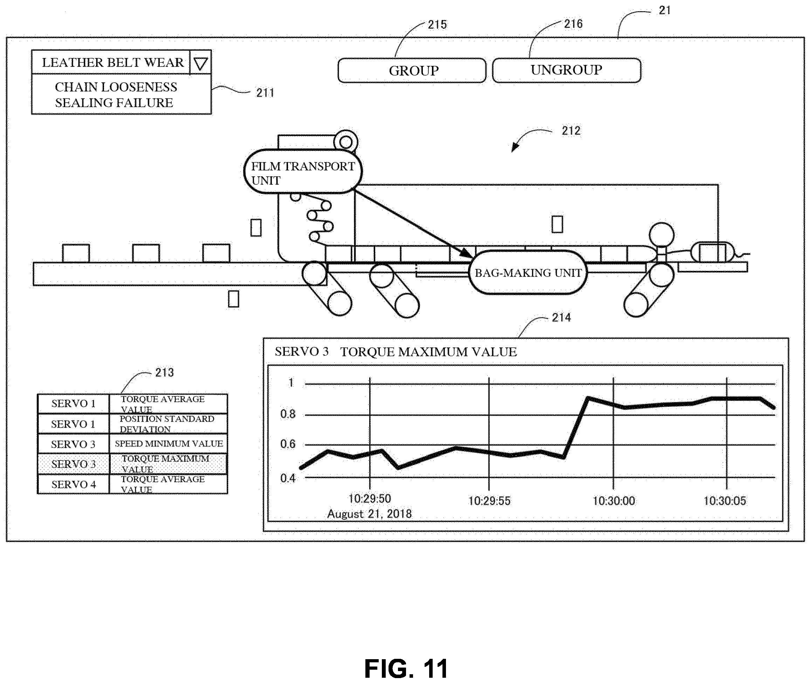

Also, in the present embodiment, the components can be displayed in groups as described above. For example, when a grouping button 215 at the top of the screen 21 in FIG. 10A is selected, the screen transitions to the screen 21 shown in FIG. 11, in which the components are grouped. The server 1 in FIG. 10A is provided in the film transport unit 31, and the servos 3 and 4 are provided in the bag-making unit 33. Therefore, when the grouping button 215 is selected, the servo 1 is displayed as a node representing the film transport unit, which is the tier above the servo 1, and the servos 3 and 4 are grouped and displayed as a node representing the bag-making unit 33, which is the tier above the servos 3 and 4. In addition, an edge corresponding to the causal relationship model shown in FIG. 10A is displayed between the node representing the film transport unit and the node representing the bag-making unit. On the other hand, when an ungrouping button 216 is selected, the screen 21 shown in FIG. 11 transitions to the screen 21 shown in FIG. 10A.

### <3-3. Display when Abnormality Occurs>

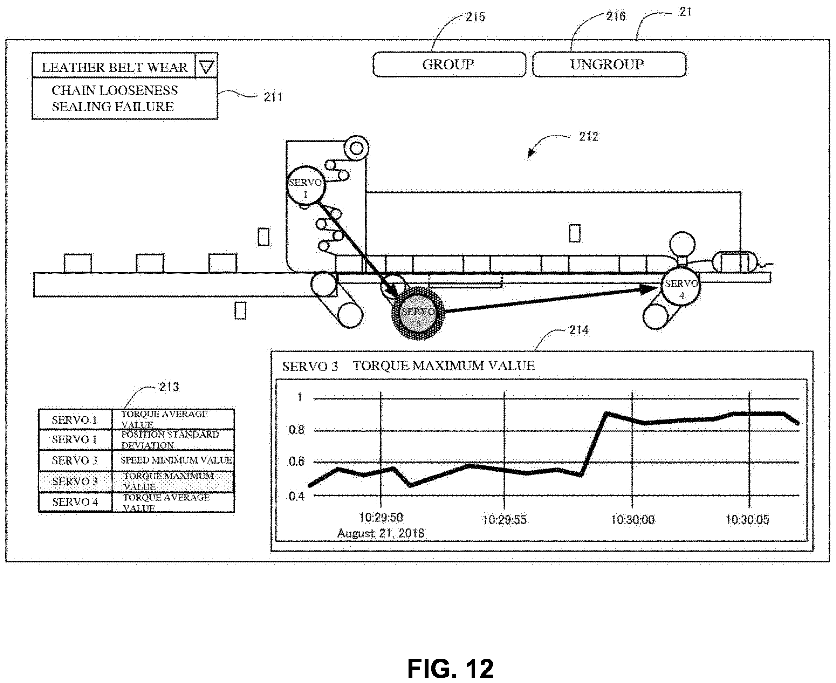

Next, the screen display when an abnormality occurs will be described with reference to FIG. 12. FIG. 12 is a diagram corresponding to FIG. 10A, in which the model diagram 212 is displayed for the case in which the abnormal event is leather belt wear. Here, an abnormality regarding leather belt wear has actually occurred. In this case, the outer edge of the node of the servo 3 in the model diagram 212 is colored and highlighted. This indicates that the abnormality may have been caused by the servo 1. In this example, as indicated by the line graph 214, the torque average value of the servo 1 increases from a certain point in time and exceeds a predetermined value (for example, 0.8). Therefore, the fact that the torque average value of the servo 3 has exceeded the predetermined value can be considered to be the cause of the occurrence of the abnormality. In this way, when an abnormality occurs, the display control unit 113 particularly highlights the node corresponding to the component whose feature value has exceeded the predetermined value. In response, the user can resolve the abnormality by repairing not only the servo 3 but also the servo 1 that affects the servo 3.

Note that if an abnormality occurs when the components are grouped and the screen in FIG. 11 is displayed, the node corresponding to the bag-making unit 33 including the servo 3 is highlighted (not shown).

### <4. Features>

(1) According to the present embodiment, when a causal relationship model is to be displayed, the user can select a mode in which all the nodes constituting the causal relationship model are displayed, or a mode in which some nodes are divided into groups and the groups are displayed as nodes. Therefore, the causal relationship model can be displayed in a mode that suits the user's purpose. For example, when the user wishes to check the detailed causal relationship between the components, the nodes can be displayed as shown in FIG. 10A, and when the user wishes to check the overall picture of the causal relationship model, the nodes can be displayed as shown in FIG. 11. Therefore, by using such a causal relationship model, it is possible to easily grasp the components that contribute to an abnormality that has occurred, and to swiftly address the abnormality.
(2) A causal relationship model related to an abnormality that may occur in the packaging machine 3 is displayed, and when an abnormality occurs in the packaging machine 3, a node corresponding to the component related to the abnormality is highlighted. Therefore, it is easy for the user to visually check the component related to the abnormality, and to swiftly proceed with taking care of the abnormality. The same applies to when the components are grouped, and a group displayed as a node can be highlighted.
(3) Changes over time in a feature value of each component are shown in a graph, and therefore the user can visually check changes over time in the feature value of the relevant component when an abnormality occurs. As a result, for example, it is possible to perform an a posteriori check regarding how the feature value has changed to cause the abnormality. Alternatively, by visually checking changes in the feature value, it is possible to detect a sign of the occurrence of an abnormality.

### <5. Modifications>

Although an embodiment of the present invention has been described in detail above, the above description is merely an example of the present invention in every respect. For example, the following modifications may be made. Note that, in the following, the same symbols are used for the same components as in the above embodiment, and descriptions of the same features as in the above embodiment are omitted as appropriate. The following modifications can be combined with each other as appropriate.

<5-1>
In the above embodiment, the selection box 211 for an abnormal event, the model diagram 212, the list 213, and the graph 214 are displayed on the screen 21. However, the screen 21 does not necessarily have to display these elements as long as at least the model diagram 212 is displayed. For example, depending on the target production facility, there may be only one abnormal event, and the selection box 211 is also unnecessary in such a case. In addition, it is not necessary to display all the elements 211 to 214 on the screen 21, and these elements may also be displayed separately on a plurality of screens so that the user can switch between them.

<5-2>
The mode in which the nodes are displayed when an abnormality occurs is not particularly limited. Nodes related to an abnormality need only be displayed in a mode different from nodes corresponding to the components not related to the abnormality. For example, various display modes such as display modes related to color, shape, or animation may be employed. The display mode may also change over time. For example, by changing the display mode between immediately after the occurrence of an abnormality and after the elapse of a predetermined period of time therefrom, the user can visually recognize an approximate time lapse from the occurrence of the abnormality. Moreover, not only the node but also the display mode of the edges connected to the node can be changed. That is to say, it is only necessary to change the display mode of at least either the node related to the abnormality or its edges. Furthermore, in addition to changing the display mode of the node and the edges, it is also possible to notify concerned parties of the abnormality by emitting warning sounds or using means such as e-mails. In addition, the display mode of the nodes can be changed not only when an abnormality occurs, but also when a sign of an abnormality is detected.

<5-3>
The node grouping shown in FIGS. 10A and FIG. 11 according to the above-described embodiment is an example, and various display methods may be employed. For example, in the example in FIG. 11, the servo 1 is displayed as a film transport unit. However, in this causal relationship model, only the servo 1 is included in the film transport unit as a component, and therefore, in the grouping display, the component may be displayed as the servo 1 without change.

The criteria for grouping are not particularly limited, and the components may be grouped based on various criteria, such as by facility, by device, by measurement item, by mechanism, or by process. Also, when there are many components, as shown in FIG. 2, the nodes may be displayed in three or more tiers with different display modes, and the model diagram may be displayed using the nodes in any of the tiers. In such a case, a display switching button may be prepared, and each time the button is pressed, the tier to be displayed may be switched to the next tier, or a predetermined tier may be selected and displayed.

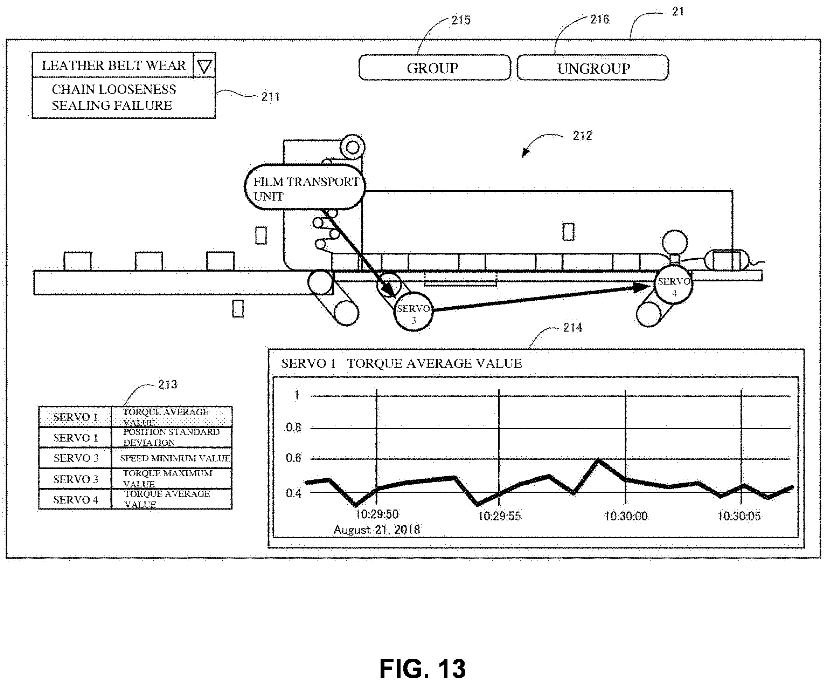

In addition, it is possible to employ a configuration with which, when a group including nodes is selected in the model diagram, the nodes included in the group are displayed. For example, in the screen in FIG. 11, if the bag-making unit is selected, the two nodes included therein can be displayed as shown in FIG. 13.

<5-4>
The method of building a causal relationship model described in the above embodiment is just an example, and other methods may be used. In addition, schematic diagram data 122 or causal relationship model data 123 that have been built using another device may be sequentially stored in the storage unit 12.

<5-5>
The present invention is also applicable to production facilities other than the packaging machine 3. In such a case, the components used to build causal relationship models may also be selected as appropriate depending on the production facility. Schematic diagram data related to a plurality of production facilities may be stored in the storage unit 12 and displayed on the display device 2 for each production facility. However, the schematic diagrams of production facilities are not essential, and it is also possible to display only the causal relationship models.

<5-6>
A display system according to the present invention can be constituted by the analysis device 1 and the display device 2 in the above-described production system. Therefore, the display device 2 in the above-described embodiment corresponds to the display unit according to the present invention, and the control unit 11 and the storage unit 12 of the analysis device 1 correspond to the control unit and the storage unit according to the present invention. For example, the control unit, the storage unit, and the display unit according to the present invention may be realized using a tablet PC or the like.

### INDEX TO THE REFERENCE NUMERALS

- 1: Analysis Device
- 11: Control Unit
- 12: Storage Unit
- 2: Display Device (Display Unit)
- 3: Packaging Machine (Production Facility)

## Claims

1. A display system to be provided in a production facility (3) that produces products and includes, as components, at least one driving means for driving the production facility (3) and at least one monitoring means for monitoring the production, the display system comprising:
a control unit (11);
a display unit (2); and
a storage unit (12),
wherein the storage unit (12) is configured to store a relationship between two or more components of the plurality of components as a causal relationship model regarding an abnormality that may occur in the production facility (3), the display system being **characterised in that**
the control unit (11) is configured to:
display, on the display unit (2), a model diagram that has nodes corresponding to the components and one or more edges connecting the nodes to each other, based on the causal relationship model; and
in response to a request from a user, display the model diagram in either a first mode in which all the nodes are displayed, or a second mode in which the nodes are divided into a predetermined number of groups based on a predetermined criterion and the groups are displayed as nodes.

2. The display system according to claim 1,
wherein, in the second mode for the model diagram, the control unit (11) is configured to display the nodes in a plurality of tiers that have different display modes, by further dividing the plurality of groups into a predetermined number of groups stepwise from a lower tier to a higher tier, and display the groups.

3. The display system according to claim 1 or 2,
wherein the control unit (11) is configured to, when an abnormality occurs in the production facility:
if the model diagram is in the first mode, change the display mode of the node corresponding to the component related to the abnormality; and
if the model diagram is in the second mode, change the display mode of the group that includes the node corresponding to the component related to the abnormality.

4. The display system according to any one of claims 1 to 3,
wherein the control unit (11) is configured to, if the model diagram is in the second mode, when a group is selected from the groups, display the nodes included in the group.

5. A display method for displaying, on a display unit (2), a causal relationship between components of a production facility (3) related to an abnormality that may occur in the production facility (3), the production facility (3) producing products and including, as the components, at least one driving means for driving the production facility (3) and at least one monitoring means for monitoring the production, the display method comprising:
a step of storing a relationship between two or more components of the plurality of components as a causal relationship model regarding an abnormality that may occur in the production facility (3); the display method **characterised in that** it further comprises:
a step of displaying, on the display unit (2), a model diagram that has nodes corresponding to the components and one or more edges connecting the nodes to each other, based on the causal relationship model,
wherein, in response to a request from a user, the model diagram is displayed in either a first mode in which all the nodes are displayed, or a second mode in which the nodes are divided into a predetermined number of groups based on a predetermined criterion and the groups are displayed.

6. A display program comprising instructions that, when executed on a computer , cause the computer to display, on a display unit (2), a causal relationship between components of a production facility (3) related to an abnormality that may occur in the production facility (3), the production facility (3) producing products and including, as the components, at least one driving means for driving the production facility (3) and at least one monitoring means for monitoring the production, the display program enabling the computer to carry out:
a step of storing a relationship between two or more components of the plurality of components as a causal relationship model regarding an abnormality that may occur in the production facility (3); wherein the display program is **characterised in that** it further contains instructions for the computer to carry out
a step of displaying, on the display unit (2), a model diagram that has nodes corresponding to the components and one or more edges connecting the nodes to each other, based on the causal relationship model,
wherein, in response to a request from a user, the model diagram is displayed in either a first mode in which all the nodes are displayed, or a second mode in which the nodes are divided into a predetermined number of groups based on a predetermined criterion and the groups are displayed.

## Patentansprüche

1. Anzeigesystem zur Bereitstellung in einer Produktionsanlage (3), die Produkte produziert und als Komponenten mindestens ein Antriebsmittel zum Antreiben der Produktionsanlage (3) und mindestens ein Überwachungsmittel zum Überwachen der Produktion umfasst, wobei das Anzeigesystem Folgendes aufweist:
eine Steuereinheit (11);
eine Anzeigeeinheit (2); und
eine Speichereinheit (12),
wobei die Speichereinheit (12) eingerichtet ist, eine Beziehung zwischen zwei oder mehr Komponenten der mehreren Komponenten als ein kausales Beziehungsmodell bezüglich einer Anomalie zu speichern, die in der Produktionsanlage (3) auftreten kann, wobei das Anzeigesystem **dadurch gekennzeichnet ist, dass**
die Steuereinheit (11) eingerichtet ist:
auf der Anzeigeeinheit (2) ein Modelldiagramm anzuzeigen, das Knoten aufweist, die den Komponenten entsprechen, und eine oder mehrere Kanten, die die Knoten miteinander verbinden, basierend auf dem kausalen Beziehungsmodell; und
als Reaktion auf eine Anforderung von einem Benutzer das Modelldiagramm entweder in einem ersten Modus anzuzeigen, in dem alle Knoten angezeigt werden, oder in einem zweiten Modus, in dem die Knoten in eine vorbestimmte Anzahl von Gruppen basierend auf einem vorbestimmten Kriterium unterteilt sind und die Gruppen als Knoten angezeigt werden.

2. Anzeigesystem nach Anspruch 1,
wobei in dem zweiten Modus für das Modelldiagramm die Steuereinheit (11) eingerichtet ist, die Knoten in mehreren Stufen anzuzeigen, die verschiedene Anzeigemodi aufweisen, indem die mehreren Gruppen weiter schrittweise von einer niedrigeren Stufe zu einer höheren Stufe in eine vorbestimmte Anzahl von Gruppen unterteilt werden, und die Gruppen anzuzeigen.

3. Anzeigesystem nach Anspruch 1 oder 2,
wobei die Steuereinheit (11) eingerichtet ist, wenn eine Anomalie in der Produktionsanlage auftritt:
wenn das Modelldiagramm in dem ersten Modus ist, den Anzeigemodus des Knotens zu ändern, der der Komponente entspricht, die mit der Anomalie in Beziehung steht; und
wenn das Modelldiagramm in dem zweiten Modus ist, den Anzeigemodus der Gruppe zu ändern, die den Knoten umfasst, der der Komponente entspricht, die mit der Anomalie in Beziehung steht.

4. Anzeigesystem nach einem der Ansprüche 1 bis 3,
wobei die Steuereinheit (11) eingerichtet ist, wenn das Modelldiagramm in dem zweiten Modus ist, wenn eine Gruppe aus den Gruppen ausgewählt wird, die in der Gruppe enthaltenen Knoten anzuzeigen.

5. Anzeigeverfahren zum Anzeigen, auf einer Anzeigeeinheit (2), einer kausalen Beziehung zwischen Komponenten einer Produktionsanlage (3), die mit einer Anomalie in Beziehung steht, die in der Produktionsanlage (3) auftreten kann, wobei die Produktionsanlage (3) Produkte produziert und als die Komponenten mindestens ein Antriebsmittel zum Antreiben der Produktionsanlage (3) und mindestens ein Überwachungsmittel zum Überwachen der Produktion umfasst, wobei das Anzeigeverfahren Folgendes aufweist:
einen Schritt des Speicherns einer Beziehung zwischen zwei oder mehr Komponenten der mehreren Komponenten als ein kausales Beziehungsmodell bezüglich einer Anomalie, die in der Produktionsanlage (3) auftreten kann; wobei das Anzeigeverfahren **dadurch gekennzeichnet ist, dass** es ferner Folgendes aufweist:
einen Schritt des Anzeigens, auf der Anzeigeeinheit (2), eines Modelldiagramms, das Knoten aufweist, die den Komponenten entsprechen, und eine oder mehrere Kanten, die die Knoten miteinander verbinden, basierend auf dem kausalen Beziehungsmodell,
wobei als Reaktion auf eine Anforderung von einem Benutzer das Modelldiagramm entweder in einem ersten Modus angezeigt wird, in dem alle Knoten angezeigt werden, oder in einem zweiten Modus, in dem die Knoten in eine vorbestimmte Anzahl von Gruppen basierend auf einem vorbestimmten Kriterium unterteilt sind und die Gruppen angezeigt werden.

6. Anzeigeprogramm, das Anweisungen aufweist, die, wenn sie auf einem Computer ausgeführt werden, den Computer veranlassen, auf einer Anzeigeeinheit (2) eine kausale Beziehung zwischen Komponenten einer Produktionsanlage (3) anzuzeigen, die mit einer Anomalie in Beziehung steht, die in der Produktionsanlage (3) auftreten kann, wobei die Produktionsanlage (3) Produkte produziert und als die Komponenten mindestens ein Antriebsmittel zum Antreiben der Produktionsanlage (3) und mindestens ein Überwachungsmittel zum Überwachen der Produktion umfasst, wobei das Anzeigeprogramm dem Computer ermöglicht, Folgendes auszuführen:
einen Schritt des Speicherns einer Beziehung zwischen zwei oder mehr Komponenten der mehreren Komponenten als ein kausales Beziehungsmodell bezüglich einer Anomalie, die in der Produktionsanlage (3) auftreten kann; wobei das Anzeigeprogramm **dadurch gekennzeichnet ist, dass** es ferner Anweisungen für den Computer enthält, Folgendes auszuführen:
einen Schritt des Anzeigens, auf der Anzeigeeinheit (2), eines Modelldiagramms, das Knoten aufweist, die den Komponenten entsprechen, und eine oder mehrere Kanten, die die Knoten miteinander verbinden, basierend auf dem kausalen Beziehungsmodell,
wobei als Reaktion auf eine Anforderung von einem Benutzer das Modelldiagramm entweder in einem ersten Modus angezeigt wird, in dem alle Knoten angezeigt werden, oder in einem zweiten Modus, in dem die Knoten in eine vorbestimmte Anzahl von Gruppen basierend auf einem vorbestimmten Kriterium unterteilt sind und die Gruppen angezeigt werden.

## Revendications

1. Système d'affichage à prévoir dans une installation de production (3) qui produit des produits et comprend, en tant que composants, au moins un moyen d'entraînement pour entraîner l'installation de production (3) et au moins un moyen de surveillance pour surveiller la production, le système d'affichage comprenant :
une unité de commande (11) ;
une unité d'affichage (2) ; et
une unité de stockage (12),
dans lequel l'unité de stockage (12) est configurée pour stocker une relation entre deux composants ou plus de la pluralité de composants en tant que modèle de relation causale concernant une anomalie qui peut se produire dans l'installation de production (3), le système d'affichage étant **caractérisé en ce que**
l'unité de commande (11) est configurée pour :
afficher, sur l'unité d'affichage (2), un schéma de modèle qui a des noeuds correspondant aux composants et un ou plusieurs bords reliant les noeuds les uns aux autres, sur la base du modèle de relation causale ; et
en réponse à une demande d'un utilisateur, afficher le schéma de modèle soit dans un premier mode dans lequel tous les noeuds sont affichés, soit dans un second mode dans lequel les noeuds sont divisés en un nombre prédéterminé de groupes sur la base d'un critère prédéterminé et les groupes sont affichés en tant que noeuds.

2. Système d'affichage selon la revendication 1,
dans lequel, dans le second mode pour le schéma de modèle, l'unité de commande (11) est configurée pour afficher les noeuds dans une pluralité de niveaux qui ont différents modes d'affichage, en divisant en outre la pluralité de groupes en un nombre prédéterminé de groupes par paliers d'un niveau inférieur à un niveau supérieur, et afficher les groupes.

3. Système d'affichage selon la revendication 1 ou 2,
dans lequel l'unité de commande (11) est configurée pour, lorsqu'une anomalie se produit dans l'installation de production :
si le schéma de modèle est dans le premier mode, changer le mode d'affichage du noeud correspondant au composant lié à l'anomalie ; et
si le schéma de modèle est dans le second mode, changer le mode d'affichage du groupe qui comprend le noeud correspondant au composant lié à l'anomalie.

4. Système d'affichage selon l'une quelconque des revendications 1 à 3,
dans lequel l'unité de commande (11) est configurée pour, si le schéma de modèle est dans le second mode, lorsqu'un groupe est sélectionné parmi les groupes, afficher les noeuds inclus dans le groupe.

5. Procédé d'affichage pour afficher, sur une unité d'affichage (2), une relation causale entre des composants d'une installation de production (3) liés à une anomalie qui peut se produire dans l'installation de production (3), l'installation de production (3) produisant des produits et comprenant, en tant que composants, au moins un moyen d'entraînement pour entraîner l'installation de production (3) et au moins un moyen de surveillance pour surveiller la production, le procédé d'affichage comprenant :
une étape de stockage d'une relation entre deux composants ou plus de la pluralité de composants en tant que modèle de relation causale concernant une anomalie qui peut se produire dans l'installation de production (3) ; le procédé d'affichage étant **caractérisé en ce qu'**il comprend en outre :
une étape d'affichage, sur l'unité d'affichage (2), d'un schéma de modèle qui a des noeuds correspondant aux composants et un ou plusieurs bords reliant les noeuds les uns aux autres, sur la base du modèle de relation causale,
dans lequel, en réponse à une demande d'un utilisateur, le schéma de modèle est affiché soit dans un premier mode dans lequel tous les noeuds sont affichés, soit dans un second mode dans lequel les noeuds sont divisés en un nombre prédéterminé de groupes sur la base d'un critère prédéterminé et les groupes sont affichés.

6. Programme d'affichage comprenant des instructions qui, lorsqu'elles sont exécutées sur un ordinateur, amènent l'ordinateur à afficher, sur une unité d'affichage (2), une relation causale entre des composants d'une installation de production (3) liés à une anomalie qui peut se produire dans l'installation de production (3), l'installation de production (3) produisant des produits et comprenant, en tant que composants, au moins un moyen d'entraînement pour entraîner l'installation de production (3) et au moins un moyen de surveillance pour surveiller la production, le programme d'affichage permettant à l'ordinateur de réaliser :
une étape de stockage d'une relation entre deux composants ou plus de la pluralité de composants en tant que modèle de relation causale concernant une anomalie qui peut se produire dans l'installation de production (3) ; dans lequel le programme d'affichage est **caractérisé en ce qu'**il contient en outre des instructions pour que l'ordinateur réalise
une étape d'affichage, sur l'unité d'affichage (2), d'un schéma de modèle qui a des noeuds correspondant aux composants et un ou plusieurs bords reliant les noeuds les uns aux autres, sur la base du modèle de relation causale,
dans lequel, en réponse à une demande d'un utilisateur, le schéma de modèle est affiché soit dans un premier mode dans lequel tous les noeuds sont affichés, soit dans un second mode dans lequel les noeuds sont divisés en un nombre prédéterminé de groupes sur la base d'un critère prédéterminé et les groupes sont affichés.
